# EUROPEAN PATENT SPECIFICATION

(11) **EP 0 658 590 B1**
(45) Date of publication and mention of the grant of the patent: **12.07.2000**
(21) Application number: 94119831.9
(22) Date of filing: 15.12.1994
(51) Int. Cl.: C08K 5/00

(54) **Controlling premature curing of vulcanizable halogen-containing polymers**
Kontrolle der vorzeitigen Härtung vulkanisierbarer halogenhaltiger Polymere
Controller le durcissement prématuré des polymères vulcanisables halogénés

(30) Priority: 16.12.1993 US 168694; 21.01.1994 US 184713
(43) Date of publication of application: 21.06.1995
(73) Proprietor: HERCULES INCORPORATED, Wilmington, Delaware 19894-0001 (US)
(72) Inventor: Class, Jay Bernard, Wilmington, Delaware 19808 (US)
(74) Representative: Hansen, Bernd, Dr. Dipl.-Chem.

(56) References cited:
- US-A- 4 128 510
- US-A- 4 482 681
- US-A- 4 745 147

## Description

In the production of vulcanized halogen-containing polymer, the use of mercapto compounds as crosslinking agents, and the use of various other additives to improve curing speed, strength and stability of the vulcanizates are known. See the hereinafter referred to patents. Vulcanization by these conventional techniques tends to be erratic and not reproducible if a mixed uncured composition has been stored. Scorching of the fresh unvulcanized (green) material takes place during storage, even at room temperature, which affects the cure conditions required to manufacture useful parts.

Scorching is thought to be the premature start of the curing reaction, including some crosslinking, which affects subsequent curing of the material. This may reduce the cure time to the point where the compound cures before the part is properly molded. Scorched compound may be partially gelled and have a higher viscosity than unscorched compound. This may reduce flow so that molds cannot be filled completely. Often improperly cured products are produced that must be discarded.

It has been observed that differences in water content of the compositions appear to be largely responsible for the scorching. Water may be absorbed by the green compositions from humidity in the air, or by inclusion in the individual ingredients, notably carbon black. Such vulcanizable compositions absorb water in normal storage, usually in an amount ranging from 0.05% to 2% by weight depending on the relative humidity and the length of storage.

U. S. Patent No. 4,128,510 describes the use of broad classes of derivatives of 2,5-dimercapto-1,3,4-thiadiazole as crosslinking agents for halogen-containing polymers to produce vulcanizates of increased strength and stability.

U. S. Patent No. 4,288,576 discloses the use as the crosslinking agent of 2,5-dimercapto-1,3,4-thiadiazole in the presence of certain basic materials to produce vulcanizates of good stability.

U. S. Patent No. 4,482,681 shows the use of a crosslinking system for halogen-containing polymers made up of a polymercapto compound or an ester derivative thereof as the crosslinking agent, a basic material and a hydrated salt to increase the rate of crosslinking.

U. S. Patent No. 4,745,147 discloses curable compositions comprising chlorinated polyethylene, a polymercapto compound, an aliphatic polyhydroxy compound, an inorganic acid acceptor and an initiator which is an amine, or a quaternary ammonium salt or a quaternary phosphonium salt. Aliphatic polyhydroxy alcohols mentioned include 2,2-dimethyl-1,3-propanediol, ethylene glycol, glycerol, 1,2-propanediol, dipentaerythritol and pentaerythritol.

It has been found that water-induced scorching of halogen-containing polymer vulcanizable compositions can be masked, greatly decreasing the effect of water-induced scorching by (1) selecting a thioester derivative of 2,5-dimercapto-1,3,4-thiadiazole as the crosslinking agent and (2) including in the compositions 1,4-butanediol (BD). Accordingly, this invention relates to a process for reducing the effects of moisture during storage prior to vulcanisation of a vulcanisable halogen-containing polymer composition containing water, comprising blending into said vulcanisable composition prior to storage, 0.1-20 parts by weight of a thioester derivative of 2,5-dimercapto-1,3,4-thiadiazole crosslinking agent and 0.1-20 parts by weight of 1,4-butanediol, the amounts of the thioester derivative and 1,4-butanediol being based upon 100 parts by weight of the halogen-containing polymer, the composition containing at least 0.05% by weight of water after storage at the start of vulcanisation; whereby the scorch time tₛ2 of the vulcanisable composition does not decrease by more than 30% after storage at ambient conditions of about 23°C and 50% relative humidity for 1 day as compared to the tₛ2 of the unstored composition.

Preferably, according to this process, the cure time of the vulcanisable compound is not significantly affected by the water content of said composition.

The invention is also directed to a vulcanisable halogen-containing polymer composition comprising 0.1-20 parts by weight of a thioester derivative of 2,5-dimercapto-1,3,4-thiadiazole crosslinking agent, 0.1-20 parts by weight of 1,4-butanediol, the amounts of the thioester derivative and 1,4-butanediol being based upon 100 parts by weight of the halogen-containing polymer, and at least 0.05% by weight of water; whereby the scorch time tₛ2 of the vulcanisable composition does not decrease by more than 30% after storage at ambient conditions of about 23°C and 50% relative humidity for 1 day as compared to the tₛ2 of the unstored composition.

Preferably, the crosslinking agent is 2-mercapto-1,3,4-thiadiazole-5-thiobenzoate.

Any saturated or unsaturated vulcanisable halogen-containing polymer, i.e. containing at least about 1 to 60% or more by weight of halogen, may be employed in the crosslinkable compositions of this invention. Typical of the halogen-containing polymers are homopolymers of epichlorohydrin; copolymers of epichlorohydrin and ethylene oxide or propylene oxide; terpolymers of epichlorohydrin, ethylene oxide or propylene oxide, and an unsaturated alkylene oxide; polychloroprene; chlorosulfonated polyethylene; chlorinated high density polyethylene; copolymers of alkyl acrylate and chloroalkyl acrylate; poly(vinyl fluoride); poly(vinyl chloride); poly(vinylidene chloride); and chlorobutyl rubber and bromobutyl rubber. A preferred vulcanizable halogen-containing polymer is chlorinated polyethylene polymer. Other preferred polymers are epichlorohydrin polymers, copolymers and terpolymers, polyacrylate rubber (polyalkyl acrylates containing a low concentration of chlorine as a crosslinking site), polychloroprene rubber, chlorobutyl rubber and bromobutyl rubber.

In addition, crosslinkable blends of halogen-containing polymers or halogen-containing polymers blended with nonhalogen-containing polymers may be used in the compositions and process of this invention. Examples of such non-halogen polymers are ethylene-propylene elastomers, nitrile elastomers and polyacrylate rubbers (non-halogen containing) and styrene-butadiene rubbers. The only requirement is that there be sufficient halogen-containing polymer present in the blend to effect crosslinking.

Herein, all parts are per hundred parts by weight of the halogen-containing polymer (phr) and percentages are by weight of the total composition except as otherwise noted.

0.1 phr to 20 phr of 1,4-butanediol are added to the unvulcanised compositions of the present invention, more preferably from about 0.5 phr to 10 phr, and most preferably from about 1 phr to about 7 phr. The amount of thioester derivative of 2,5-dimercapto-1,3,4-thiadiazole crosslinking agent added is 0.1 phr to 20 phr, more preferably from about 0.5 phr to about 5 phr.

In some cases, it may be desirable to add a small amount of conventional stabiliser. Total stabiliser in the present invention composition preferably is in the range of about 0.1 phr to 5 phr or more. Exemplary of the most preferable stabilisers are phenyl-β-naphthylamine, di-β-naphthyl-p-phenylenediamine, sym-d-β-naphthyl-p-phenylenediamine, styrenated diphenylamines, N-isooctyl-p-amino-phenol, the reaction product of diphenylamine and acetone, polymerised trimethyldihydroquinoline, 4,4'-thio-bis(6-tert-butyl-m-cresol), the reaction product of crotonaldehyde and 3-methyl-6-tert-butyl-phenol, nickel dibutyldithiocarbamate, the zinc salt of 2-mercaptobenzimidazole and nickel dimethyldithiocarbamate.

An acid acceptor is preferably used in conjunction with the thioester derivative of 2,5-dimercapto-1,3,4-thiodiazole. An acid acceptor is a basic material or a material which will become basic on heating to the crosslinking temperature. Typical useful inorganic materials are basic metal oxides and hydroxides and their salts with weak acids, such as, for example, magnesium oxide, magnesium hydroxide, calcium oxide, calcium hydroxide, barium oxide, barium carbonate, lead oxides, lead acetate, sodium phenoxide and sodium acetate. The acid acceptor is added broadly, preferably from about 0.25 phr to about 50 phr, more preferably from about 0.5 phr to about 50 phr, and most preferably from about 1 phr to about 20 phr of the vulcanizable composition.

An accelerator of the well-known types containing aliphatic or aromatic amine or quaternary nitrogen groups may also be used. Preferably about 0.5 to 3 phr of accelerator is used. Particularly useful accelerators are the reaction products of butyaldehyde and aniline, and tetrabutylammonium bromide.

Other ingredients commonly used in rubber vulcanization can be included, for example, fillers, extenders, pigments, plasticizers, softeners, etc. The presence of a filler and, in particular, carbon black gives very advantageous results.

The crosslinking agent and other ingredients can be incorporated or admixed with the polymer in any desired fashion. For example, they can be uniformly blended with a polymer by mixing in a high intensity internal mixer, such as a "Banbury" mixer; or by simply milling on a conventional rubber mill to prepare the green compositions of the present invention. By this means, the agents are uniformly distributed throughout the polymer and uniform crosslinking is effected when the composition is thereafter subjected to curing heat. It is generally preferable to mix at temperatures from about 77°C (170°F) to about 121°C (250°F) because the compositions are usually relatively scorch-resistant below about 121°C (250°F) in the short mixing time. Other known methods of admixing the composition are also useful.

The conditions under which the crosslinking is effected can be varied over a wide range. Preferably the crosslinking temperature will be within the range of broadly from about 121°C (250°F) to over 218°C (425°F) and more preferably from about 171°C (340°F) to about 204°C (400°F). The time will vary inversely with the temperature and will preferably range from about 10 seconds to 24 hours, more preferably from about 2 to about 10 minutes. While the crosslinking process can be conducted in air at atmospheric pressure, it will generally be conducted in a metal mold or in a steam autoclave at the required temperature.

For ease of incorporating the crosslinking agent into the crosslinkable polymer mixture, it may be desirable to formulate the thiadiazole derivative as a concentrate in a binder or carrier which can be added, along with the other ingredients, in small amounts to the polymer composition without adverse effect on the properties of the crosslinked composition. Particularly advantageous binders or carriers are polymers which may or may not be crosslinkable by the crosslinking agent. Suitable binders for the concentrate are, for example, ethylene-propylene rubber, ethylene-propylene terpolymers, styrene-butadiene rubber, natural rubber, low density polyethylene, amorphous polypropylene and polyisobutylene. Other suitable binders or carriers for use in the preparation of such easily handled concentrates are waxes, resins, or other low-melting solids. Typical useful materials are paraffin wax, stearic acid, microcrystalline wax, rosin, rosin esters and hydrocarbon resins. Concentrations of the thiadiazole derivative can vary from less than 30% to more than 90%, preferably from about 50% to 80%. In the final prevulcanization green mix additional amounts of one or more of the active curing compounds may be added to give the desired vulcanization and vulcanizate properties. The acid acceptor should not be incorporated in the concentrate lest it decompose the thiadiazole derivative.

Another highly effective technique for simplifying final formulation is to prepare a dry pourable powder cure premix composition. Consequently, this invention is also directed to a dry pourable powder cure premix composition comprising a thioester derivative of 2,5-dimercapto-1,3,4-thiadiazole crosslinking agent, the BD and a pourable siliceous finely divided material, preferably silica, talc and clay. This premix will contain enough of the filler to give a pourable powder formulation. Amounts of filler normally are about 10-50% by weight of the formulation. The remainder of the formulation usually is crosslinker and BD in the desired proportions for the particular usage. Other inert additives may also be included. This pourable premix avoids the handling of liquids when mixing these ingredients into the green pre-vulcanization products.

The vulcanizable compositions of this invention exhibit more uniform scorching over a prolonged period of storage, little affected by the moisture content of the mixture after storage. Also, scorching during storage is decreased. The present invention compositions, with changes in ingredients and their amounts, may give mixtures of different scorch characteristics. However, batches of the same ingredients in the same amounts will exhibit substantially the same scorch characteristics irrespective of the moisture content of the initial ingredients, the storage relative humidity, and length of storage. Consequently, these compositions give vulcanizates of highly uniform curing characteristics and cured physical properties when vulcanized under the same conditions. For instance, the fabricator can store a batch of green composition for a number of days, such as 1, 4, 14 or more, and regardless of moisture absorption by the composition, will be able to process the unvulcanized composition to meet product requirements.

While all of the ingredients are normally blended in a single operation, often it is possible to rework the initially blended compositions of the present invention to change the relative amounts of the ingredients or even to add an ingredient. For instance, if a sample of a composition of the instant invention made using BD is tested prior to use in production and the scorch is too short for processing in a specific production operation, then adjustments can be made in the concentration of crosslinker and/or accelerator (e.g. amine accelerator) to increase the scorch time. Compositions prepared following prior techniques generally cannot be reworked because they are likely to scorch. Consequently, this invention is also directed to a process for reworking a vulcanisable halogen-containing polymer composition comprising sequentially blending before storage, into said vulcanisable composition, 0.1-20 parts by weight of a thioester derivative of 2,5-dimercapto-1,3,4-thiadiazole crosslinking agent and 0.1-20 parts by weight of 1,4-butanediol, the amounts of the thioester derivative and 1,4-butanediol being based upon 100 parts by weight of the halogen-containing polymer, storing the vulcanisable composition for one or more days after which it contains at least 0.05% by weight of water, testing a sample of the vulcanisable composition for the cure rate and/or scorch rate of the vulcanisable composition and the physical properties of the vulcanised halogen-containing polymer composition, and reformulating the vulcanisable composition by changing the relative amounts of the composition's ingredients or adding an ingredient.

Preferably, reformulating comprises adjusting the concentration in the vulcanisable halogen-containing polymer composition of at least one member selected from the group consisting the thioester derivative of 2,5-dimercapto-1,3,4-thiadiazole crosslinking agent and 1,4-butanediol. According to another preferred embodiment, the composition comprises one or more additives selected from the group consisting of accelerators, acid acceptors, binders, stabilisers, fillers, extenders, pigments, plasticisers and softeners and the reformulating comprises adjusting the concentration of the one or more additive in the vulcanizable halogen-containing polymer composition.

The following examples illustrate the preparation of the vulcanizable compositions and vulcanizates thereof, properties of the vulcanizates, and the effect of water on scorching and the masking of the scorching in vulcanizates made from the present compositions. All compositions of the examples are given in parts by weight per hundred parts of the rubber (halogen-containing polymer) content (phr) except where indicated otherwise.

In the following examples the ingredients were mixed using standard procedure on laboratory mixers. Rubber physical properties were determined following ASTM D412-92. The extent of cure was measured from data obtained using a Monsanto oscillating disk rheometer (ODR) following the procedure of ASTM D2084-92. Scorch time was reported as tₛ2, the time in minutes from closure of the ODR cavity until the torque increased 0.23 N·m (2 lbf.in) above the minimum torque, which occurs a short time after cavity closure when the applied heat decreases the viscosity and lowers the torque before significant crosslinking occurs. Shorter scorch times during curing indicate that more scorch has taken place before curing, as compared to unaged composition. Thus, a reduction in the rate of scorching increase during storage is shown by a longer scorch time (tₛ2). Cure time was reported as t₉₀, the time in minutes from closure of the ODR to reach 90% of increase from minimum to maximum vulcanization (cure) torque. Another advantage of this invention is the reduced time to cure shown by the t₉₀ data.

Curing of the present invention compositions is not significantly affected by the presence of normal amounts of water absorbed during storage, typically at least 0.05% by weight, more typically from 0.05 to 2% by weight, and often 0.2% to 2% by weight of the composition. This is indicated by the scorch times and cure times of the compositions which are not significantly affected by the water content of the compositions. Scorch time and cure time are quantified in terms of the performance of the composition under curing conditions.

Thus, as the terminology is used herein, scorch time and cure time of a composition are not significantly affected by the presence of water when in curing using the conditions of Example 1 (ODR at about 177°C (350°F), 3° arc and 100 cpm), the scorch time and cure time (tₛ2 and t₉₀ as herein defined) are not significantly changed by water absorption during storage. "Not significantly changed", as used herein, means that neither tₛ2 nor t₉₀ of the composition during such curing decrease (as compared to the tₛ2 and t₉₀ of the green, substantially moisture-free, unstored composition) after storage at ambient conditions of about 23°C and 50% relative humidity of the composition for 1, 4 and 14 days by more than 30%, 50% and 75%, respectively; preferably, not more than 20%, 30% and 40%, respectively; and, most preferably, not more than 5%, 10% and 15%, respectively. (In other words, the compositions of this invention are capable of being stored for these periods of time with no more than the percentage decrease specified.)

The most desirable relationship between these parameters is a sufficiently long scorch time to allow the compositions to be processed before start of cure, followed by a rapid cure. Provided the scorch time is adequate for handling, the smaller the t₉₀ to tₛ2 ratio, the better the cure procedure. Since the compositions of the present invention mask the scorch effect of water, storage accompanied by the absorption of water does not affect the cure conditions. Thus, the cure/scorch time ratio of a composition of the present invention does not change significantly during storage, i.e., 1, 4, 14, days or more at ambient conditions of about 23° and 50° relative humidity. By "does not change significantly" it is meant that the t₉₀/tₛ2 ratio does not change after 1, 4 and 14 days by more than about 35%, preferably not more than about 20%, and most preferably by not more than about 5%. (In other words, the compositions of this invention are capable of being stored for these periods of time with no more than the percentage increase specified.)

(While the tests presented herein are specific with respect to temperature and humidity, it should be understood that the vulcanizable compositions may be stored at temperatures and relative humidity normally encountered in commercial practice. Such relative humidities may typically range from about 20% to 100%.)

One additional advantage of the instant invention with respect to compositions comprising chlorinated polyethylene polymer is that t₉₀/tₛ2 ratios below 4, preferably below 3, may be achieved.

Table 1 gives the ingredients in phr of compositions A and B used in Examples 1 to 4, excluding crosslinking agents 2-mercapto-1,3,4-thiadiazole-5-thiobenzoate ("ECHO" A, made by Hercules Incorporated, Wilmington, DE), and BD. Chlorinated polyethylene (CPE) polymer containing 36% chlorine was used (Tyrin CM 0136, Dow Chemical Co., Plaquemine, LA).

**TABLE 1**

| Ingredient | Composition A | Composition B |
|---|---|---|
| CPE | 100 | 100 |
| carbon black, N550* | 50 | -- |
| carbon black, N762* | -- | 50 |
| Plasticizer A (a) | 35 | -- |
| Plasticizer B (b) | -- | 30 |
| Magnesium Oxide | 5 | 10 |
| Stabilizer (c) | 2 | -- |
| Amine Accelerator (d) | 1.15 | 1 |

| | | |
|---|---|---|
| * ASTM D1765-91 | | |
| (a) trioctyl trimellitate | | |
| (b) di (butoxyethyoxyethyl) adipate | | |
| (c) styrenated diphenylamines ("Wingstay" 29, The Goodyear Tire and Rubber Co.) | | |
| (d) N-phenyl-3,5-diethyl-2-propyl-1,4-dihydropyridine ("Vanax" 808, R.T. Vanderbilt Company, Incorporated) | | |

In the tables of the examples, Tₘᵢₙ is the torque in N·m (lbf.in) when the composition reaches its minimum torque as the viscosity of the composition in the ODR decreases on heating before significant crosslinking. Tₘₐₓ is the torque when maximum cure is reached, as indicated by no further torque increase with further heating time. ΔT is the difference from minimum to maximum torque (100% cure); t₉₀ and tₛ2 are defined above. Motor time is the time for the recorder pen of the data plotter to traverse the plotting span of the recorder paper, starting at the closing of the ODR cavity.

### EXAMPLE 1

This example illustrates in Tests 3-6 the preferred practice of the present invention. The compositions of Example 1 consist of compositions A (193.15 parts) or B (191.0 parts) of Table 1 and contain 2phr "ECHO" A; Tests 1 and 2 contain no additive; Tests 3-6 contain the indicated amounts of BD (99+%, Aldrich Chemical Co., Milwaukee, WI). Tests 3-6 demonstrate the excellent curability of the vulcanizable compositions of the present invention as compared to Tests 1 and 2, which do not contain BD. Curing was carried out in these examples using an ODR at 182°C (360°F), 3° arc and 100 cpm. These tests were performed on unstored, freshly formulated compositions.

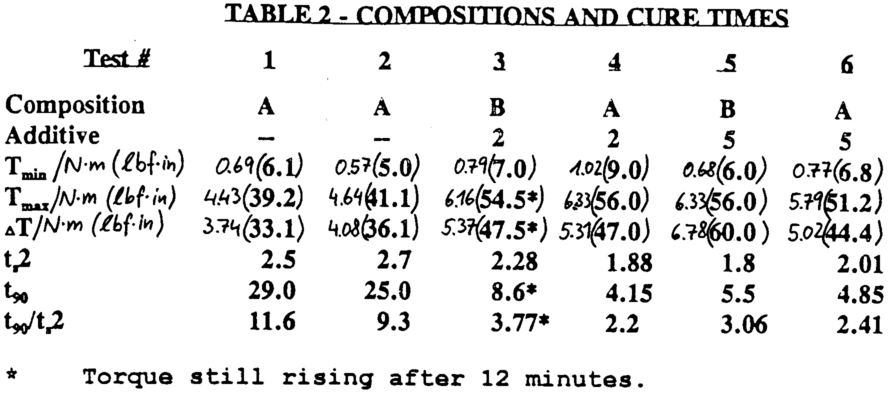

In Tests 3-6 all of the scorch times of the present invention compositions were adequate and all of the t₉₀/tₛ2 ratios were less than 4. Of particular importance are the extremely rapid t₉₀ times for the compositions of the present invention containing both "ECHO" A and BD.

### EXAMPLE 2

This example illustrates the preparation of a vulcanizate from the composition of Test #3 stored at ambient conditions, approximately 23°C and 50% relative humidity, for 14 days, and then cured under the same conditions as Test #3.

**TABLE 3**

| CURE TIMES, 14 DAYS STORAGE | |
|---|---|
| Test # | 7 |
| Tₘᵢₙ/N·m (lbf·in) | 1.02 (9.0) |
| Tₘₐₓ/N·m (lbf·in) | 6.64 (58.8*) |
| ΔT/N·m (lbf·in) | 5.63 (49.8*) |
| tₛ2 | 1.7 |
| t₉₀ | 5.3* |
| t₉₀/tₛ2 | 3.12* |

| | |
|---|---|
| * Torque still rising after 12 minutes. | |

In Test #7, the scorch time and t₉₀/tₛ2 ratio were excellent when the composition was cured after 14 days storage. Most significantly, 14 days storage, with the composition absorbing moisture, had little effect on the important t₉₀/tₛ2 cure/scorch times ratio compared to using fresh, unstored composition.

### EXAMPLE 3 - PHYSICAL PROPERTIES

The tests of this example show the physical properties of vulcanizates from unaged compositions of the present invention press cured five minutes at 182°C (360°F). All of the tests used 193.15 parts of mixture B from Table 1 and contained 2 phr of "ECHO" A. Test 7 contained no BD; Test 8 and 9 contained 2 phr and 5 phr respectively of BD. In Table 4, M100, M200 and M300 is the pressure required to extend the vulcanized test samples 100, 200 and 300% respectively; TB is the tensile strength at break; EB is the % elongation at break, and Hardness is Shore A.

**TABLE 4**

| PHYSICAL PROPERTIES | | | |
|---|---|---|---|
| Test # | 7 | 8 | 9 |
| M100/MPa (psi) | 3.86 (560) | 4.27 (620) | 3.79 (550) |
| M200/MPa (psi) | 7.99 (1160) | 9.16 (1330) | 7.65 (1110) |
| M300/MPa (psi) | 11.2 (1630) | 13.1 (1900) | 10.8 (1570) |
| TB | 2140 | 2320 | 2120 |
| EB | 450 | 400 | 450 |
| Hardness | 70 | 73 | 72 |

### EXAMPLE 4

Test #9 (5 phr BD) was repeated using compositions aged 1 and 3 days at 150°C (302°F). The physical properties are listed in Table 5.

**TABLE 5**

| Test # | 9(unaged) | 10(aged 1 day) | 11(aged 3 days) |
|---|---|---|---|
| M100/MPa (psi) | 3.79 (550) | 5.72 (830) | 7.03 (1020) |
| M200/MPa (psi) | 7.65 (1110) | 11.4 (1660) | 13.0 (1880) |
| M300/MPa (psi) | 10.8 (1570) | 15.1 (2190) | -- |
| TB | 2120 | 2250 | 2080 |
| EB | 450 | 320 | 240 |
| Hardness | 72 | 78 | 85 |

### EXAMPLE 5

A masterbatch was prepared comprising all of the ingredients, except the crosslinking agent (1,3,4-thiadiozate-5-thiobenzoate) and BD, and was mixed in a type B Banbury laboratory internal mixer. The crosslinking agent and, when used the BD, were added on a laboratory differential speed two roll mill. The mixed rubber composition was cut into test pieces of approximately 3.2cm x 3.2cm x 3.2cm (1 1/4 inches x 1 1/4 inches x 1/4 inch) suitable for cure evaluation in an Oscillating Disk Rheometer (ODR, Monsanto Model 100) and were tested using a standard 12 minute ODR run. Samples were tested the same day as prepared (0 days aging or unaged) or aged as specified in the tables and charts. Aging was at 50% relative humidity at 22°C (72°F).

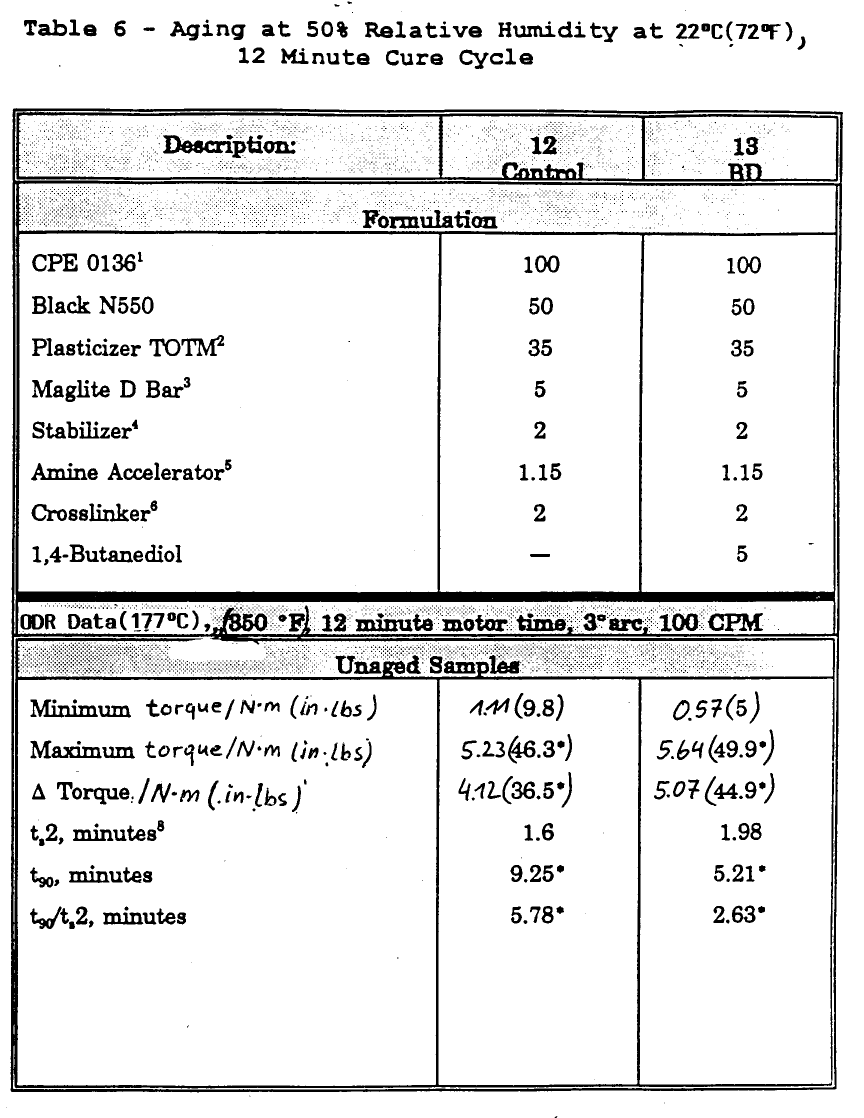

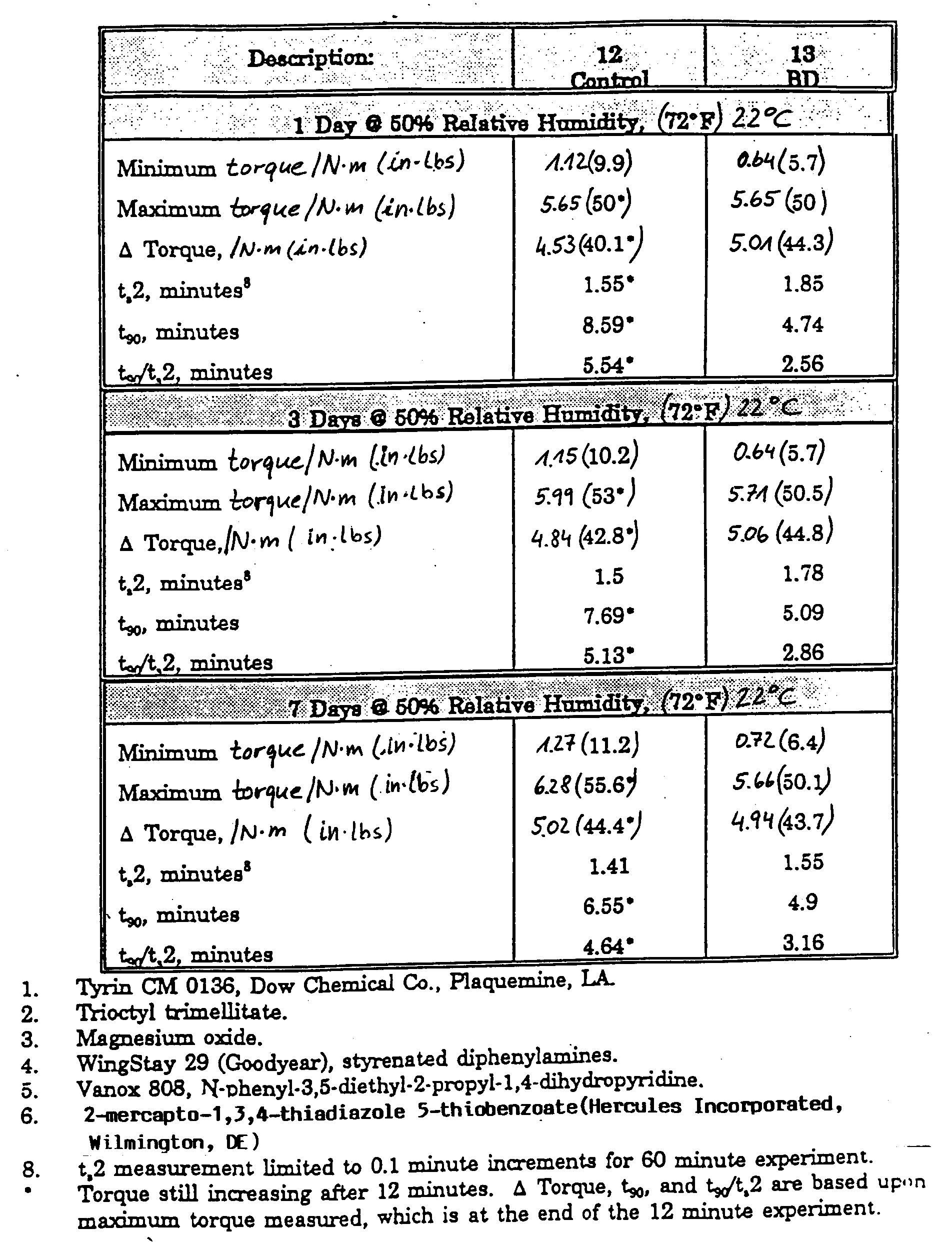

The times required for the unaged and 7 day aged sample to reach the same torque level on the cure curves was also recorded. The torque level was identified at the point where the cure rate of the unaged sample had dropped to 0.5.

This data, presented in Table 7, as follows:
The torque and time of the point on the cure curve of the unaged sample where the cure rate has decreased to half of its maximum value was identified. Then, on the cure curve obtained after 7 day aging, the point at which the torque is identical to the torque obtained at half the maximum cure rate of the unaged sample was identified. The time for the sample aged 7 days was divided by the time for the unaged sample to reach this torque level. The reduction in time is the percent reduction from the unaged time, for the 7 day sample to reach the torque when the cure rate of the unaged sample dropped to half the maximum cure rate, after the cure has passed through the maximum cure point.

**TABLE 7**

| ACTIVATION OF CURE DATA RELATED TO INFLUENCE OF HUMID AGING ON CURE | | |
|---|---|---|
| | 12 Control | 13 BD |
| Unaged | | |
| Rₘₐₓ/N·m/min (lb·in/min^{a}) | 0.79 (6.96) | 2.39 (21.14) |
| R_{0.5max}/N·m/min (lb·in/min^{b}) | 0.39 (3.48) | 1.19 (10.57) |
| T_{0.5max}/N·m (lb·in^{c}) | 3.72 (32.9) | 4.38 (38.74) |
| t₀, min^{d} | 5.44 | 4.1 |

| Aged | | |
|---|---|---|
| t₇/min^{e} | 2.9 | 3.64 |
| t₇/t_{0,} % | 53.4 | 88.8 |
| Reduction in t₀₋₇, %^{f} | 46.6 | 11.2 |

| | | |
|---|---|---|
| a. Maximum cure rate of unaged sample | | |
| b. 0.5 maximum cure rate after passing through the maximum cure rate of unaged sample. | | |
| c. Torque at 0.5 maximum cure rate of unaged sample. | | |
| d. Time to reach 0.5 maximum cure rate of unaged sample. | | |
| e. Time for sample aged 7 days to reach the torque at 0.5 maximum cure rate of unaged sample. | | |
| f. Reduction of time required for sample aged 7 days to reach torque at 0.5 maximum cure rate of unaged sample. | | |

Prior to considering this data, it should be understood that the control samples, as well as the unaged sample of this invention, did not completely cure when they were evaluated using the 12 minute cure cycle normally used in testing. If a sample has not been completely cured, the Δ torque level (change in torque level) would be reported lower than actual, which would give lower t₉₀ and lower t₉₀/tₛ2. Where the samples did not reach full cure in 12 minutes, data which depend upon full cure (Δ torque, t₉₀, and t₉₀/tₛ2) were calculated using torque data at 12 minute cure in place of maximum torque. There does not seem to be any technical judgement on how to define a level of maximum torque when the cure is not completed by the end of the 12 minute test, i.e., torque is increasing at the end of the experiment as occurred with the control samples. As a result, it is difficult to compare data from control sample 12 with the data of sample 13 representing the invention. For instance, from the plot of cure rate versus time of the unaged samples, it is clear that the torque of the control crosslinking agent is increasing more slowly than the sample containing BD and therefore it is my opinion that the control samples were not fully cured during the 12 minute test. If we had continued the cure of this experiment another 12 minutes, a total of 24 minutes, we could increase the torque of the control sample and thus the t₉₀ value and ratio of t₉₀/tₛ2.

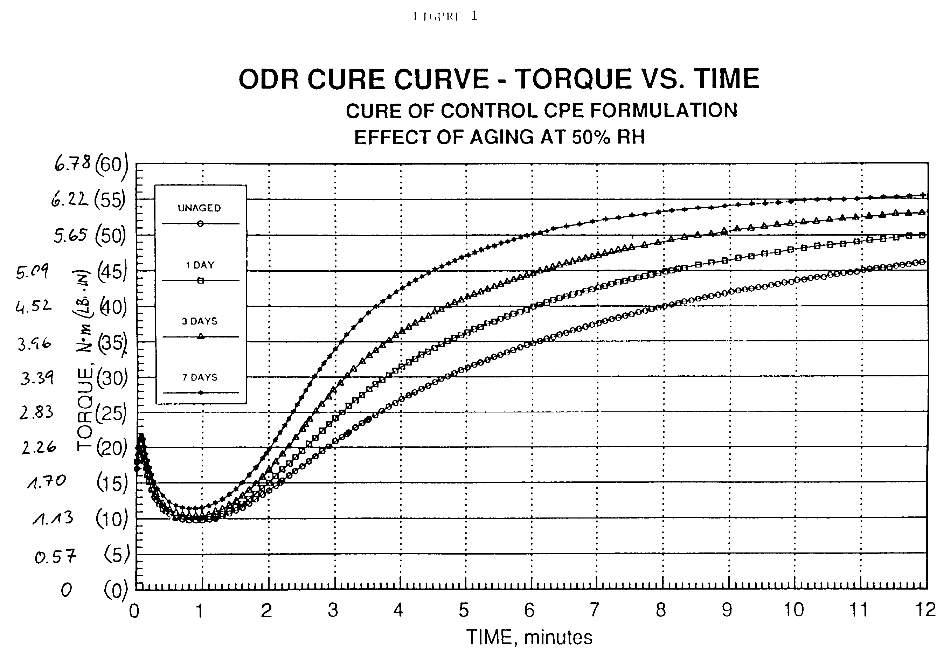

Because of the uncertainty of measuring t₉₀ for the samples that did not fully cure during the 12 minute test because they did not fully cure during the test time, the ODR cure plots were used to evaluate the samples for this experiment. These plots are presented as Figures 1-2 and will be explained below.

Data on the original, uncured samples (Table 6) shows that the control is not as effective as BD and does not achieve the desired levels. The control samples were not completely cured after 12 minutes at curing temperature in the ODR. These samples showed a marked increase in the rate of cure after humid aging (Table 6). This change in cure performance would make it difficult for a manufacturer to operate his process with a standard set of cure conditions. In contrast, the aged BD samples fully cured during the test and the unaged sample was almost fully cured during the test making them more desirable for commercial use.

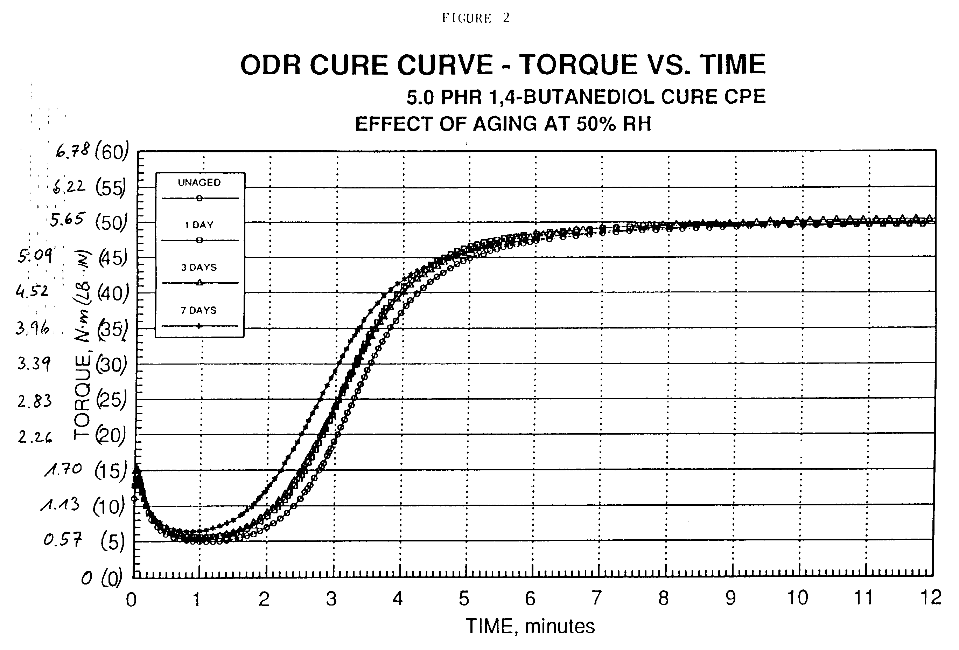

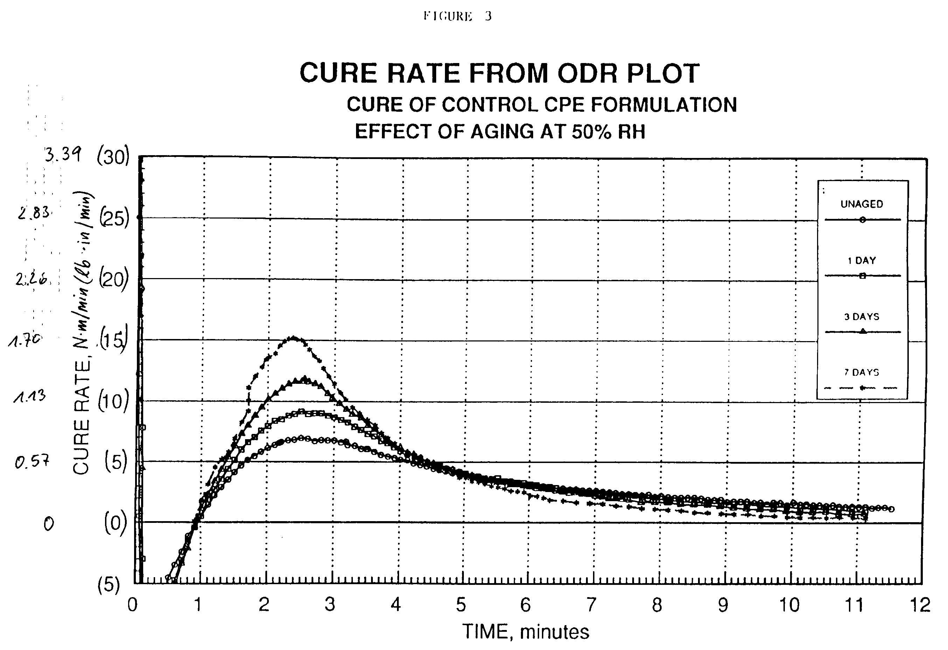

The fact that only the aged BD sample achieved full cure can be seen from Figures 1-4. Figure 2 shows the ODR cure curves of aged samples of the invention. The aged sample achieved full cure as can be seen from the fact that torque became flat in the upper right corner. The unaged sample was almost fully cured. Contrast this with the curves for the unaged control samples in Figures 1, as well as the aged BD samples of Figures 2. Those samples did not achieve full cure during the 12 minute test, as can be seen by the fact that the curves were still rising. Figures 3-4 are cure rate curves. These Figures show that only the aged BD containing samples fully cured, as its curve is the only curve that dropped to a zero cure rate.

Since not all of the samples fully cured, skewing the data, one of the best ways to compare the invention with the control is by studying the ODR plots attached as Figures 1-2 and cure rate curves of Figures 3-4.

Figures 1-2 show the ODR cure curves for unaged and aged samples of the control and invention. Figure 1 shows that the control samples experienced significant increases in scorch and cure rate after humid aging of 1, 3 and 7 days. Figure 2 shows that the BD containing samples of the invention had much more consistent scorch and cure rate upon humid aging than the control samples. Thus, the BD samples of the invention would provide the most consistent scorch and cure rate properties and are best suited for commercial operations where inconsistent scorch and cure rate will lead to unsuitable products.

In addition, also because of the uncertainty of measuring t₉₀ for the control samples because they did not fully cure within the 12 minute test, the maximum cure rate may be used to express the effectiveness of an activator. Using this criteria, from Figures 3-4 we see that the control samples both show an increase in cure rate with exposure to moisture. BD, on the other hand, shows a slight drop in cure rate. This is an indication that BD overrides the scorch effects of moisture on the cure.

Figure 3 shows that with only crosslinker cure rate significantly increases and maximum cure time (the peak of the curve) decreases with humid aging. Most notable is the huge increase in the cure rate when the sample is aged. This shown by the peak of the cure.

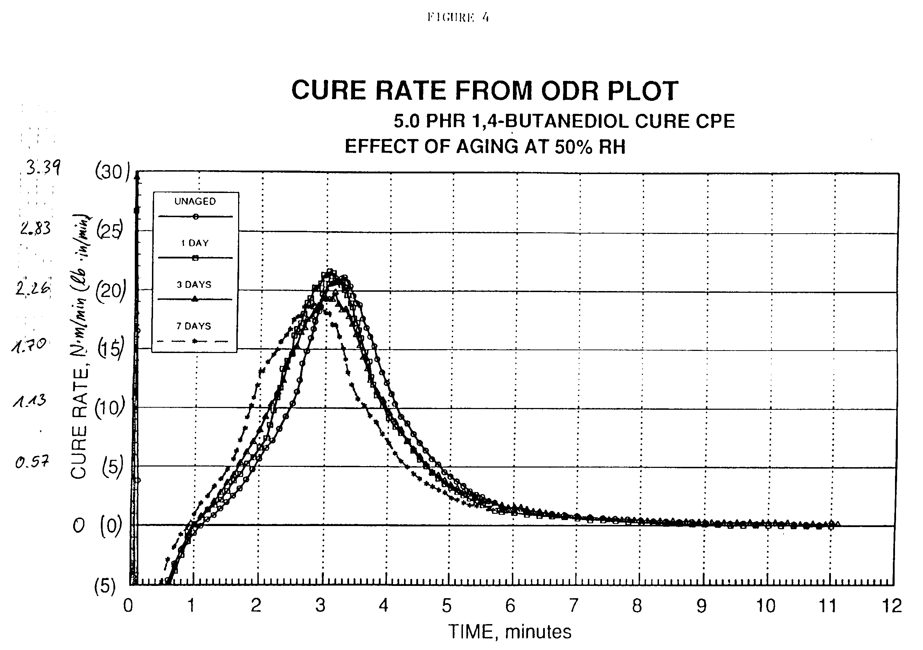

Figures 4 shows that BD samples have a higher cure rate than comparable control samples. On humid aging the cure rate stays the same or slightly decreases with the invention whereas it increases with the control. Commercial operations can accommodate a slightly reduced cure rate more easily than they can handle a cure rate which increases over time. This is because the increased cure rate can not easily be accommodated. In contrast, the decreased cure rate can be handled by always using a slightly higher cure time than would be needed with the unaged composition. Thus using the invention the commercial practitioner is able to produce parts, with fewer or no parts needing to be discarded due to defects.

Table 7 shows that based on the t₇/t_{0,} % and reduction in t₀₋₇, % cure time and cure rate were much more consistent with the BD sample than the control sample. That is, the torque value was much more consistent with the unaged and 7 day aged samples of the invention, than with the control sample. This data confirms that the invention masks the effects of humid aging on the compositions.

## Claims

1. A process for reducing the effects of moisture during storage prior to vulcanization of a vulcanizable halogen-containing polymer composition containing water, comprising blending into said vulcanizable composition prior to storage, 0.1-20 parts by weight of a thioester derivative of 2,5-dimercapto-1,3,4-thiadiazole crosslinking agent and 0.1-20 parts by weight of 1,4-butanediol, the amounts of the thioester derivative and 1,4-butanediol being based upon 100 parts by weight of the halogen-containing polymer, the composition containing at least 0.05% by weight of water after storage at the start of vulcanization; whereby the scorch time tₛ2 of the vulcanizable composition does not decrease by more than 30% after storage at ambient conditions of about 23°C and 50% relative humidity for 1 day as compared to the tₛ2 of the unstored composition.

2. A process according to Claim 1, wherein the composition contains 0.2-2% by weight of water at the start of vulcanization.

3. A process according to Claim 1 or Claim 2, wherein the vulcanizable halogen-containing polymer is a homopolymer of epichlorohydrin; a copolymer of epichlorohydrin and ethylene oxide or propylene oxide; a terpolymer of epichlorohydrin, ethylene oxide or propylene oxide and an unsaturated alkylene oxide; polychloroprene; chlorosulfonated polyethylene; chlorinated high density polyethylene; a copolymer of alkyl acrylate and chloroalkyl acrylate; poly(vinyl fluoride); poly(vinyl chloride); poly(vinylidene chloride); chlorobutyl rubber; or bromobutyl rubber.

4. A process according to Claim 3, wherein the vulcanizable halogen-containing polymer is a chlorinated polyethylene polymer.

5. A process according to Claim 4, wherein the ratio t₉₀/tₛ2 for the composition is less than 4.

6. A process according to Claim 5, wherein the ratio t₉₀/tₛ2 for the composition is less than 3.

7. A process according to Claim 3, wherein the vulcanizable halogen-containing polymer is a polymer, copolymer or terpolymer of epichlorohydrin.

8. A process according to Claim 3, wherein the vulcanizable halogen-containing polymer is a polyacrylate rubber.

9. A process according to any preceding Claim, wherein said crosslinking agent is 2-mercapto-1,3,4-thiadiazole-5-thiobenzoate.

10. A vulcanizable halogen-containing polymer composition comprising 0.1-20 parts by weight of a thioester derivative of 2,5-dimercapto-1,3,4-thiadiazole crosslinking agent, 0.1-20 parts by weight of 1,4-butanediol, the amounts of the thioester derivative and 1,4-butanediol being based upon 100 parts by weight of the halogen-containing polymer, and at least 0.05% by weight of water; whereby the scorch time tₛ2 of the vulcanizable composition does not decrease by more than 30% after storage at ambient conditions of about 23°C and 50% relative humidity for 1 day as compared to the tₛ2 of the unstored composition.

11. A composition according to Claim 10, which comprises 0.2-2% of water.

12. A composition according to Claim 10 or Claim 11, wherein the vulcanizable halogen-containing polymer is a homopolymer of epichlorohydrin; a copolymer of epichlorohydrin and ethylene oxide or propylene oxide; a terpolymer of epichlorohydrin, ethylene oxide or propylene oxide, and an unsaturated alkylene oxide; polychloroprene; chlorosulfonated polyethylene; chlorinated high density polyethylene; a copolymer of alkyl acrylate and chloroalkyl acrylate; poly(vinyl fluoride); poly(vinyl chloride); poly(vinylidene chloride); chlorobutyl rubber; or bromobutyl rubber.

13. A composition according to Claim 12, wherein the vulcanizable halogen-containing polymer is a chlorinated polyethylene polymer.

14. A composition according to Claim 13, whose ratio of t₉₀/tₛ2 is less than 4.

15. A composition according to Claim 14, wherein the ratio of t₉₀/tₛ2 is less than 3.

16. A composition according to Claim 12, wherein the vulcanizable halogen-containing polymer is a polymer, copolymer or terpolymer of epichlorohydrin.

17. A composition according to Claim 12, wherein the vulcanizable halogen-containing polymer is a polyacrylate rubber.

18. A composition in the form of a dry pourable powder cure premix composition for inclusion in a halogen-containing vulcanizable polymer composition, comprising a thioester derivative of 2,5-dimercapto-1,3,4-thiadiazole crosslinking agent, 1,4-butanediol and a pourable siliceous finely divided filler.

19. A composition according to any of Claims 10-18, wherein the crosslinking agent is 2-mercapto-1,3,4-thiadiazole-5-thiobenzoate.

20. A process for reworking a vulcanizable halogen-containing polymer composition comprising sequentially blending before storage, into said vulcanizable composition, 0.1-20 parts by weight of a thioester derivative of 2,5-dimercapto-1,3,4-thiadiazole crosslinking agent and 0.1-20 parts by weight of 1,4-butanediol, the amounts of the thioester derivative and 1,4-butanediol being based upon 100 parts by weight of the halogen-containing polymer, storing the vulcanizable composition for one or more days after which it contains at least 0.05% by weight of water, testing a sample of the vulcanizable composition for the cure rate and/or scorch rate of the vulcanizable composition and the physical properties of the vulcanized halogen-containing polymer composition, and reformulating the vulcanizable composition by changing the relative amounts of the composition's ingredients or adding an ingredient.

21. A process according to Claim 20, wherein the step of reformulating the vulcanizable composition comprises adjusting the concentration of the thioester derivative of 2,5-dimercapto-1,3,4-thiadiazole crosslinking agent and/or 1,4-butanediol in the vulcanizable composition.

22. A process according to Claim 20, wherein the vulcanizable composition comprises one or more additives selected from accelerators, acid acceptors, binders, stabilizers, fillers, extenders, pigments, plasticizers and softeners.

23. A process according to Claim 22, wherein the step of reformulating the vulcanizable composition comprises adjusting the concentration of one or more of the additives in the vulcanizable composition.

## Patentansprüche

1. Verfahren zur Verringerung der Einflüsse von Feuchtigkeit während der Lagerung vor der Vulkanisation einer vulkanisierbaren, halogenhaltigen Polymerzusammensetzung mit einem Gehalt an Wasser, umfassend das Einmischen von 0,1-20 Gew.-teilen eines Thioesterderivats von 2,5-Dimercapto-1,3,4-thiadiazol-Vernetzungsmittel und 0,1-20 Gew.-teilen 1,4-Butandiol in die vulkanisierbare Zusammensetzung vor der Lagerung, wobei die Mengen des Thioesterderivats und des 1,4-Butandiols sich auf 100 Gew.-teile des halogenhaltigen Polymeren beziehen und die Zusammensetzung bei Beginn der Vulkanisation nach der Lagerung mindestens 0,05 Gew.-% Wasser enthält, wobei die Anvulkanisationszeit tₛ2 der vulkanisierbaren Zusammensetzung nach 1-tägiger Lagerung bei Umgebungsbedingungen von etwa 23°C und 50 % relativer Feuchtigkeit um nicht mehr als 30 % abnimmt, verglichen mit der tₛ2-Zeit der ungelagerten Zusammensetzung.

2. Verfahren nach Anspruch 1, wobei die Zusammensetzung zu Vulkanisationsbeginn 0,2-2 Gew.-% Wasser enthält.

3. Verfahren nach Anspruch 1 oder 2, wobei es sich beim vulkanisierbaren, halogenhaltigen Polymeren um eines der folgenden Produkte handelt: Homopolymere von Epichlorhydrin; Copolymere von Epichlorhydrin und Ethylenoxid oder Propylenoxid; Terpolymere von Epichlorhydrin, Ethylenoxid oder Propylenoxid und einem ungesättigten Alkylenoxid; Polychloropren; chlorsulfoniertes Polyethylen; chloriertes Polyethylen hoher Dichte; Copolymere von Alkylacrylat und Chloralkylacrylat; Poly-(vinylfluorid); Poly-(vinylchlorid); Poly-(vinylidenchlorid); sowie Chlorbutylkautschuk oder Brombutylkautschuk.

4. Verfahren nach Anspruch 3, wobei es sich beim vulkanisierbaren, halogenhaltigen Polymeren um ein chloriertes Polyethylen-Polymeres handelt.

5. Verfahren nach Anspruch 4, wobei das Verhältnis t₉₀/tₛ2 für die Zusammensetzung weniger als 4 beträgt.

6. Verfahren nach Anspruch 5, wobei das Verhältnis t₉₀/tₛ2 für die Zusammensetzung weniger als 3 beträgt.

7. Verfahren nach Anspruch 3, wobei es sich beim vulkanisierbaren, halogenhaltigen Polymeren um ein Polymeres, Copolymeres oder Terpolymeres von Epichlorhydrin handelt.

8. Verfahren nach Anspruch 3, wobei es sich beim vulkanisierbaren, halogenhaltigen Polymeren um einen Polyacrylat-Kautschuk handelt.

9. Verfahren nach einem der vorstehenden Ansprüche, wobei es sich beim Vernetzungsmittel um 2-Mercapto-1,3,4-thiadiazol-5-thiobenzoat handelt.

10. Vulkanisierbare, halogenhaltige Polymerzusammensetzung, umfassend 0,1-20 Gew.-teile eines Thioesterderivats von 2,5-Dimercapto-1,3,4-thiadiazol-Vernetzungsmittel, 0,1-20 Gew.-teile 1,4-Butandiol, wobei die Mengen des Thioesterderivats und des 1,4-Butandiols sich auf 100 Gew.-teile des halogenhaltigen Polymeren beziehen, und mindestens 0,05 Gew.-% Wasser, wobei die Anvulkanisationszeit tₛ2 der vulkanisierbaren Zusammensetzung nach 1-tägiger Lagerung bei Umgebungsbedingungen von etwa 23°C und 50 % relativer Feuchtigkeit um nicht mehr als 30 % abnimmt, verglichen mit der tₛ2-Zeit der ungelagerten Zusammensetzung.

11. Zusammensetzung nach Anspruch 10, die 0,2-2 % Wasser enthält.

12. Zusammensetzung nach Anspruch 10 oder 11, wobei es sich beim vulkanisierbaren, halogenhaltigen Polymeren um eines der folgenden Produkte handelt: Homopolymere von Epichlorhydrin; Copolymere von Epichlorhydrin und Ethylenoxid oder Propylenoxid; Terpolymere von Epichlorhydrin, Ethylenoxid oder Propylenoxid und einem ungesättigten Alkylenoxid; Polychloropren; chlorsulfoniertes Polyethylen; chloriertes Polyethylen hoher Dichte; Copolymere von Alkylacrylat und Chloralkylacrylat; Poly-(vinylfluorid); Poly-(vinylchlorid); Poly-(vinylidenchlorid); sowie Chlorbutylkautschuk oder Brombutylkautschuk.

13. Zusammensetzung nach Anspruch 12, wobei es sich beim vulkanisierbaren, halogenhaltigen Polymeren um ein chloriertes Polyethylen-Polymeres handelt.

14. Zusammensetzung nach Anspruch 13, wobei das Verhältnis t₉₀/tₛ2 weniger als 4 beträgt.

15. Zusammensetzung nach Anspruch 14, wobei das Verhältnis t₉₀/tₛ2 weniger als 3 beträgt.

16. Zusammensetzung nach Anspruch 12, wobei es sich beim vulkanisierbaren, halogenhaltigen Polymeren um ein Polymeres, Copolymeres oder Terpolymeres von Epichlorhydrin handelt.

17. Zusammensetzung nach Anspruch 12, wobei es sich beim vulkanisierbaren, halogenhaltigen Polymeren um einen Polyacrylat-Kautschuk handelt.

18. Zusammensetzung in Form einer trockenen, gießfähigen, pulverförmigen Vulkanisationsvorgemisch-Zusammensetzung zum Zusatz zu einer halogenhaltigen, vulkanisierbaren Polymerzusammensetzung, umfassend ein Thioesterderivat von 2,5-Dimercapto-1,3,4-thiadiazol als Vernetzungsmittel, 1,4-Butandiol und einen gießfähigen, siliciumdioxidhaltigen, fein verteilten Füllstoff.

19. Zusammensetzung nach einem der Ansprüche 10 bis 18, wobei es sich beim Vernetzungsmittel um 2-Mercapto-1,3,4-thiadiazol-5-thiobenzoat handelt.

20. Verfahren zum Überarbeiten einer vulkanisierbaren, halogenhaltigen Polymerzusammensetzung, umfassend in sequenzieller Weise die folgenden Stufen: Einmischen in die vulkanisierbare Zusammensetzung vor der Lagerung von 0,1-20 Gew.-teilen eines Thioesterderivats von 2,5-Dimercapto-1,3,4-thiadiazol als Vernetzungsmittel und 0,1-20 Gew.-teilen 1,4-Butandiol, wobei die Mengen des Thioesterderivats und des 1,4-Butandiols auf 100 Gew.-teile des halogenhaltigen Polymeren bezogen sind, Lagern der vulkanisierbaren Zusammensetzung für einen oder mehrere Tage, wonach sie mindestens 0,05 Gew.-% Wasser enthält, Testen einer Probe der vulkanisierbaren Zusammensetzung auf die Vulkanisationsgeschwindigkeit und/oder Anvulkanisationsgeschwindigkeit der vulkanisierbaren Zusammensetzung und auf die physikalischen Eigenschaften der vulkanisierten, halogenhaltigen Polymerzusammensetzung und Neuformulieren der vulkanisierbaren Zusammensetzung durch Veränderung der relativen Mengen der Bestandteile der Zusammensetzung oder durch Hinzufügen eines Bestandteils.

21. Verfahren nach Anspruch 20, wobei die Stufe des Neuformulierens der vulkanisierbaren Zusammensetzung das Einstellen der Konzentration des Thioesterderivats von 2,5-Dimercapto-1,3,4-thiadiazol als Vernetzungsmittel und/oder von 1,4-Butandiol in der vulkanisierbaren Zusammensetzung umfasst.

22. Verfahren nach Anspruch 20, wobei die vulkanisierbare Zusammensetzung ein oder mehr Additive enthält, die unter Beschleunigern, Säureakzeptoren, Bindemitteln, Stabilisatoren, Füllstoffen, Streckmitteln, Pigmenten, Plastifizierern und Weichmachern ausgewählt sind.

23. Verfahren nach Anspruch 22, wobei die Stufe des Neuformulierens der vulkanisierbaren Zusammensetzung die Einstellung der Konzentration von einem oder mehreren der Additive in der vulkanisierbaren Zusammensetzung umfasst.

## Revendications

1. Procédé pour réduire les effets de l'humidité au cours du stockage avant la vulcanisation d'une composition de polymère halogéné vulcanisable contenant de l'eau, comprenant l'étape consistant à mélanger à ladite composition vulcanisable, avant stockage, 0,1 à 20 parties en poids d'un dérivé consistant en un thio-ester de 2,5-dimercapto-1,3,4-thiadiazole servant d'agent de réticulation et 0,1 à 20 parties en poids de 1,4-butanediol, les quantités du thio-ester et du 1,4-butanediol étant basées sur 100 parties en poids du polymère halogéné, la composition contenant au moins 0,05 % en poids d'eau après stockage au début de la vulcanisation ; le temps de vulcanisation prématurée tₛ2 de la composition vulcanisable ne diminuant pas ainsi d'une valeur supérieure à 30 % après stockage dans des conditions ambiantes consistant en une température d'environ 23°C et une humidité relative de 50 % pendant 1 jour, comparativement à la valeur de tₛ2 de la composition non stockée.

2. Procédé suivant la revendication 1, dans lequel la composition contient 0,2 à 2 % en poids d'eau au début de la vulcanisation.

3. Procédé suivant la revendication 1 ou la revendication 2, dans lequel le polymère halogéné vulcanisable est un homopolymère d'épichlorhydrine ; un copolymère d'épichlorhydrine et d'oxyde d'éthylène ou d'oxyde de propylène ; un terpolymère d'épichlorhydrine, d'oxyde d'éthylène ou d'oxyde de propylène et d'un oxyde d'alkylène insaturé ; le polychloroprène ; un polyéthylène chlorosulfoné ; un polyéthylène haute densité chloré ; un copolymère d'un acrylate d'alkyle et d'un acrylate de chloralkyle ; le poly(fluorure de vinyle) ; le poly-(chlorure de vinyle) ; le poly(chlorure de vinylidène) ; le caoutchouc chlorobutyle ; ou le caoutchouc bromobutyle.

4. Procédé suivant la revendication 3, dans lequel le polymère halogéné vulcanisable est un polyéthylène chloré.

5. Procédé suivant la revendication 4, dans lequel le rapport t₉₀ / tₛ2 de la composition est inférieur à 4.

6. Procédé suivant la revendication 5, dans lequel le rapport t₉₀ / tₛ2 de la composition est inférieur à 3.

7. Procédé suivant la revendication 3, dans lequel le polymère halogéné vulcanisable est un polymère, copolymère ou terpolymère d'épichlorhydrine.

8. Procédé suivant la revendication 3, dans lequel le polymère halogéné vulcanisable est un caoutchouc polyacrylate.

9. Procédé suivant l'une quelconque des revendications précédentes, dans lequel l'agent de réticulation consiste en 5-thiobenzoate de 2-mercapto-1,3,4-thiadiazole.

10. Composition de polymère halogéné vulcanisable comprenant 0,1 à 20 parties en poids d'un dérivé consistant en un thio-ester de 2,5-dimercapto-1,3,4-thiadiazole servant d'agent de réticulation, 0,1 à 20 parties en poids de 1,4-butanediol, les quantités du thio-ester et du 1,4-butanediol étant basées sur 100 parties en poids du polymère halogéné, et au moins 0,05 % en poids d'eau ; le temps de vulcanisation prématurée tₛ2 de la composition vulcanisable ne diminuant ainsi pas d'une valeur supérieure à 30 % après un stockage dans des conditions ambiantes consistant en une température d'environ 23°C et une humidité relative de 50 % pendant 1 jour, comparativement à la valeur de tₛ2 de la composition non stockée.

11. Composition suivant la revendication 10, qui comprend 0,2 à 2 % d'eau.

12. Composition suivant la revendication 10 ou la revendication 11, dans laquelle le polymère halogéné vulcanisable est un homopolymère d'épichlorhydrine ; un copolymère d'épichlorhydrine et d'oxyde d'éthylène ou d'oxyde de propylène ; un terpolymère d'épichlorhydrine, d'oxyde d'éthylène ou d'oxyde de propylène et d'un oxyde d'alkylène insaturé ; le polychloroprène ; un polyéthylène chlorosulfoné ; un polyéthylène haute densité chloré ; un copolymère d'un acrylate d'alkyle et d'un acrylate de chloralkyle ; le poly(fluorure de vinyle) ; le poly-(chlorure de vinyle) ; le poly(chlorure de vinylidène) ; le caoutchouc chlorobutyle ; ou le caoutchouc bromobutyle.

13. Composition suivant la revendication 12, dans laquelle le polymère halogéné vulcanisable est un polyéthylène chloré.

14. Composition suivant la revendication 13, dont le rapport t₉₀ / tₛ2 est inférieur à 4.

15. Composition suivant la revendication 14, dans laquelle le rapport t₉₀ / tₛ2 est inférieur à 3.

16. Composition suivant la revendication 12, dans laquelle le polymère halogéné vulcanisable est un polymère, copolymère ou terpolymère d'épichlorhydrine.

17. Composition suivant la revendication 12, dans laquelle le polymère halogéné vulcanisable est un caoutchouc polyacrylate.

18. Composition sous forme d'une composition de prémélange de durcissement en poudre sèche apte à être versée, pour l'incorporation à une composition de polymère halogéné vulcanisable, comprenant un dérivé consistant en un thio-ester de 2,5-dimercapto-1,3,4-thiadiazole servant d'agent de réticulation, du 1,4-butanediol et une charge siliceuse finement divisée apte à être versée.

19. Composition suivant l'une quelconque des revendications 10 à 18, dans laquelle l'agent de réticulation consiste en 5-thiobenzoate de 2-mercapto-1,3,4-thiadiazole.

20. Procédé pour retraiter une composition de polymère halogéné vulcanisable, comprenant les étapes successives consistant à mélanger, avant stockage, à ladite composition vulcanisable, 0,1 à 20 parties en poids d'un dérivé consistant en un thio-ester de 2,5-dimercapto-1,3,4-thiadiazole servant d'agent de réticulation et 0,1 à 20 parties en poids de 1,4-butanediol, les quantités du thioester et du 1,4-butanediol étant basées sur 100 parties an poids du polymère halogéné, à stocker la composition vulcanisable pendant un ou plusieurs jours, temps au bout duquel elle contient au moins 0,05 % en poids d'eau, à tester un échantillon de la composition vulcanisable en ce qui concerne la vitesse de durcissement et/ou la vitesse de vulcanisation prématurée de la composition vulcanisable et les propriétés physiques de la composition de polymère halogéné vulcanisée, et à reformuler la composition vulcanisable en modifiant les quantités relatives des ingrédients de la composition ou en ajoutant un ingrédient.

21. Procédé suivant la revendication 20, dans lequel l'étape de reformulation de la composition vulcanisable comprend l'ajustement de la concentration du dérivé consistant en thio-ester de 2,5-dimercapto-1,3,4-thiadiazole servant d'agent de réticulation et/ou du 1,4-butanediol dans la composition vulcanisable.

22. Procédé suivant la revendication 20, dans lequel la composition vulcanisable comprend un ou plusieurs additifs choisis entre des accélérateurs, des accepteurs d'acide, des liants, des stabilisants, des charges, des diluants, des pigments, des plastifiants et des ramollissants.

23. Procédé suivant la revendication 22, dans lequel l'étape de reformulation de la composition vulcanisable comprend l'ajustement de la concentration d'un ou plusieurs des additifs dans la composition vulcanisable.
